# DEMANDE DE BREVET EUROPEEN

(11) **EP 1 956 152 A1**
(43) Date de publication de la demande: **13.08.2008**
(21) Numéro de dépôt: 08101481.3
(22) Date de dépôt: 11.02.2008
(51) Int. Cl.: E03D 1/32, F16K 21/18

(54) **Dispositif de remplissage d'un réservoir de chasse d'eau à flotteur orientable**

(30) Priorité: 12.02.2007 FR 0701003
(71) Demandeur: Wirquin Plastiques, 44477 Carquefou (FR)
(72) Inventeur: LE COENT, Daniel, 44470, CARQUEFOU (FR)
(74) Mandataire: Larcher, Dominique

(57) **Abrégé**

L'invention concerne un dispositif de remplissage d'un réservoir de chasse d'eau destiné à être couplé à des moyens d'alimentation en eau, ledit dispositif comprenant :
- un corps principal ;
- des moyens de distribution d'eau dans ledit réservoir, destinés à s'étendre en direction d'une partie inférieure dudit réservoir ;
- des moyens d'ouverture/fermeture de circulation d'eau entre lesdits moyens d'alimentation et lesdits moyens de distribution ;
- des moyens d'actionnement desdits moyens d'ouverture/fermeture comprenant un flotteur mobile en translation le long desdits moyens de distribution, et relié audit moyens d'ouverture/fermeture par un levier pivotant.

Selon l'invention, un tel dispositif de remplissage comprend une liaison pivot présentant un axe de rotation destiné à s'étendre sensiblement verticalement, ledit flotteur, ledit levier pivotant et lesdits moyens de distribution étant montés mobiles à rotation solidairement autour dudit axe.

## Description

### 1. Domaine de l'invention

Le domaine de l'invention est celui des équipements sanitaires, et en particulier celui des chasses d'eau destinées à être installées dans des toilettes.

Plus précisément, l'invention concerne la conception et la réalisation de dispositif permettant d'assurer le remplissage des réservoirs de chasses d'eau avec un niveau de liquide contrôlé.

### 2. Art antérieur

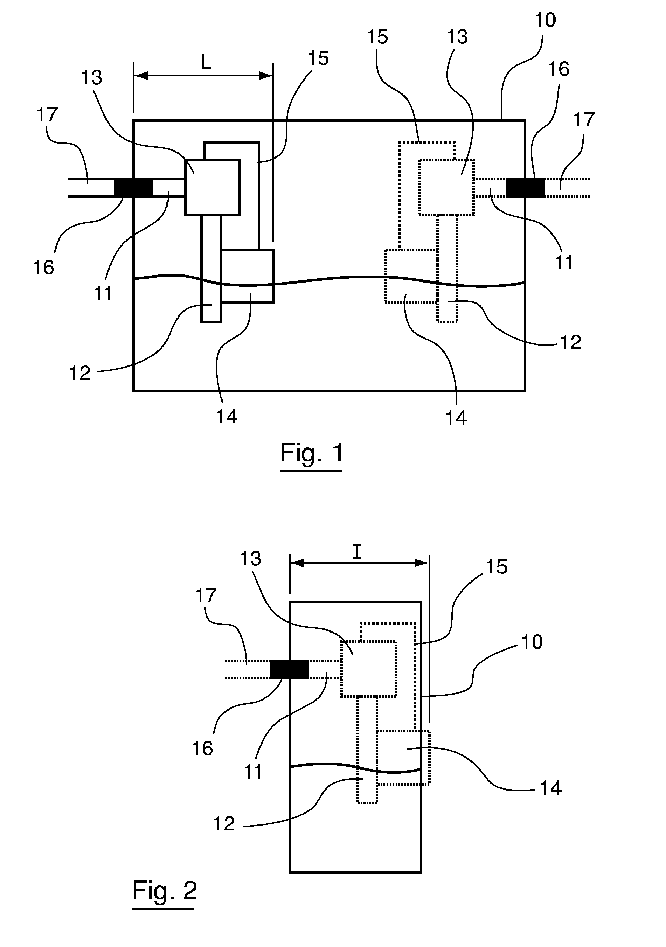

Classiquement, et comme cela est représenté sur la figure 1, de tels dispositifs de remplissage de réservoir 10 de chasse d'eau sont reliés à une arrivée d'eau 11 par un robinet d'isolement 16 relié à une canalisation 17 du réseau de circulation d'eau d'un bâtiment.

De tels dispositifs de remplissage comprennent un tube 12 qui s'étend sensiblement à la verticale et qui permet d'alimenter en eau le réservoir 10. Des moyens d'ouverture/fermeture 13 sont interposés entre l'arrivée d'eau 11 et le tube 12 de façon à autoriser ou à empêcher le passage de l'eau depuis l'arrivée 11 vers le tube 12. Les moyens d'ouverture/fermeture 13 sont activés par un flotteur 14 mobile le long du tube 12 et qui, par la poussée d'Archimède, leur transmet un effort par l'intermédiaire d'un bras articulé 15 en fonction du niveau d'eau contenue dans le réservoir 10.

Ainsi, lorsque le niveau d'eau dans le réservoir 10 est faible, les moyens d'ouverture/fermeture 13 sont ouverts de sorte que l'eau circule depuis l'arrivée d'eau 11 vers le tube 12 afin de remplir le réservoir 10. À mesure que le niveau d'eau augmente dans le réservoir 10, le flotteur 14 monte jusqu'à ce qu'il entraîne la fermeture des moyens d'ouverture/fermeture 13 lorsque l'eau dans le réservoir 10 a atteint un niveau prédéterminé.

Selon l'architecture du réseau d'eau du bâtiment, et la forme de la chasse d'eau, la canalisation 17 peut se situer à droite ou à gauche, comme cela est représenté sur la figure 1, ou bien derrière le réservoir 10 de la chasse d'eau, comme cela est représenté sur la figure 2 (en vue de profil)

Les dispositifs de remplissage selon l'art antérieur, peuvent, comme cela apparaît clairement sur la figure 1, être mis en place dans le réservoir 10 aussi bien lorsque la canalisation 17 est placée à gauche, ou à droite (représenté en pointillés sur la figure 1) du réservoir 10, et sans que cela est un incidence sur leur fonctionnement.

### 3. Inconvénients de l'art antérieur

En revanche, lorsque l'arrivée d'eau 11 est localisée derrière le réservoir 10 de la chasse d'eau, tel que cela est représenté à la figure 2, il devient en pratique difficile voire impossible d'installer le dispositif de remplissage.

En effet, la largeur « L » d'un tel dispositif est souvent plus importante que la largueur « 1 » disponible à l'intérieur du réservoir. Cela apparaît clairement sur la figure 2 sur laquelle un dispositif de remplissage selon l'art antérieur est représenté en pointillés.

En outre, la longueur « L » de tels dispositifs est fixe. En effet, il n'est pas possible de modifier l'orientation du flotteur et du levier pivotant de façon à modifier la largeur du dispositif de remplissage. Ceci est notamment dû au fait que le levier pivotant est directement relié aux moyens d'ouverture/fermeture et que ceux-ci sont complexes et mettent en oeuvre des pièces qui sont généralement indexées les une aux autres de sorte qu'elles ne peuvent être déplacées.

Cette contrainte a imposé aux fabricants de tels dispositifs de remplissage de miniaturiser ces dispositifs de remplissage : on constate que la tendance actuelle est à réduire l'encombrement des réservoirs de chasse d'eau et en particulier de leur largeur « 1 ». du fait d'une longueur « L » supérieure à « 1 »

Il arrive donc souvent qu'un installateur soit confronté à l'impossibilité d'installer le dispositif de remplissage dont il dispose lorsqu'il arrive sur un chantier.

Cette contrainte impose donc à l'installateur de devoir choisir parmi les dispositifs de remplissage disponibles sur le marché, celui dont les dimensions sont compatibles avec celles du réservoir de la chasse d'eau et en fonction de l'agencement du réseau d'eau.

Cette étape de choix s'avère être particulièrement fastidieuse pour un installateur, du fait qu'elle lui impose de mesurer l'espace disponible dans le réservoir puis de les comparer aux caractéristiques dimensionnelles des dispositifs disponibles sur le marché afin de vérifier leur compatibilité.

Cette étape de choix est d'autant plus complexe que l'installateur est un amateur et peut constituer une source d'erreur.

Cette contrainte impose également souvent à l'installateur professionnel, par exemple un plombier, de devoir stocker plusieurs références de dispositifs de remplissage et de robinets d'isolement disponibles sur le marché parmi lesquels il devra faire son choix afin de procédé à une installation rapide d'un dispositif de remplissage sans devoir se rendre par exemple chez un grossiste pour effectuer son choix.

### 4. Objectifs de l'invention

L'invention a notamment pour objectif de pallier ces inconvénients de l'art antérieur.

Plus précisément, un objectif de l'invention est de fournir un tel dispositif de remplissage qui s'adapte à la plupart des réservoirs de chasse et à toutes les configurations d'alimentation des réservoirs.

Un autre objectif de l'invention est de fournir un tel dispositif de remplissage qui soit simple, rapide à installer et qui soit fiable et peu coûteux.

### 5. Exposé de l'invention

Ces objectifs, ainsi que d'autres qui apparaîtront par la suite, sont atteints à l'aide d'un dispositif de remplissage d'un réservoir de chasse d'eau destiné à être couplé à des moyens d'alimentation en eau, ledit dispositif comprenant :
- un corps principal ;
- des moyens de distribution d'eau dans ledit réservoir, destinés à s'étendre en direction d'une partie inférieure dudit réservoir ;
- des moyens d'ouverture/fermeture de circulation d'eau entre lesdits moyens d'alimentation et lesdits moyens de distribution ;
- des moyens d'actionnement desdits moyens d'ouverture/fermeture comprenant un flotteur mobile en translation le long desdits moyens de distribution, et relié auxdits moyens d'ouverture/fermeture par un levier pivotant.

Selon l'invention, un tel dispositif de remplissage d'un réservoir de chasse d'eau comprend une liaison pivot présentant un axe de rotation destiné à s'étendre sensiblement verticalement, ledit flotteur, ledit levier pivotant et lesdits moyens de distribution étant montés mobiles à rotation solidairement autour dudit axe.

Ainsi, l'invention repose sur une approche tout à fait nouvelle et inventive selon laquelle le flotteur ainsi que le levier pivotant par l'intermédiaire duquel il agit sur les moyens d'ouverture/fermeture peuvent être orientés de façon à modifier l'encombrement du dispositif de remplissage en fonction des contraintes liées à l'environnement, comme l'agencement du réseau de distribution du bâtiment dans lequel est installée la chasse d'eau, la taille du réservoir...

Cette approche selon laquelle le flotteur est orientable se distingue donc des techniques de l'art antérieur selon lesquelles la position du flotteur est fixe, ce qui ne permet pas d'ajuster l'encombrement du dispositif de remplissage comme le propose l'invention.

La technique selon l'invention apporte donc une solution au problème de l'orientation du flotteur qui est un problème complexe du fait que le flotteur est relié aux moyens d'ouverture/fermeture par le levier pivotant, et que les moyens d'ouverture/fermeture présentent une architecture relativement complexe.

Selon une caractéristique avantageuse de l'invention, lesdits moyens de distribution sont liés audit corps principal par ladite liaison pivot.

Les moyens de distribution peuvent donc être entraînés à rotation par rapport au corps principal selon l'axe de la liaison pivot, qui est avantageusement confondu avec l'axe principal des moyens de distribution.

Préférentiellement, ledit corps principal présente une première cavité destinée à être reliée auxdits moyens d'alimentation, et une deuxième cavité destinée à être reliée auxdits moyens de distribution, ladite première cavité et ladite deuxième cavité communiquant entre-elles.

L'eau provenant du réseau de distribution d'un bâtiment peut ainsi pénétrer le corps principal en traversant respectivement la première puis la deuxième cavité avant d'être acheminée en direction du réservoir par les moyens de distribution.

Avantageusement, lesdits moyens d'ouverture/fermeture comprennent une membrane logée entre lesdites première et deuxième cavités et susceptible d'obturer ladite deuxième cavité.

Une telle membrane peut avantageusement prendre deux positions, une position d'obturation dans laquelle elle obture la deuxième cavité de façon que l'eau provenant du réseau d'alimentation ne puisse être acheminée en direction du réservoir, et une position d'ouverture dans laquelle l'eau du réseau peut traverser successivement la première et la deuxième cavité avant d'être injectée dans le réservoir par les moyens de distribution.

Selon une caractéristique préférée, lesdits moyens d'ouverture/fermeture comprennent un couvercle définissant avec ladite membrane une troisième cavité.

Les moyens d'ouverture/fermeture constitue ainsi un mécanisme dénommé servovalve dans lequel, le passage de la membrane de sa position d'ouverture à sa position d'obturation dépend de la pression régnant à l'intérieur de la troisième cavité.

Avantageusement, ledit couvercle est susceptible d'être pivoté autour dudit axe.

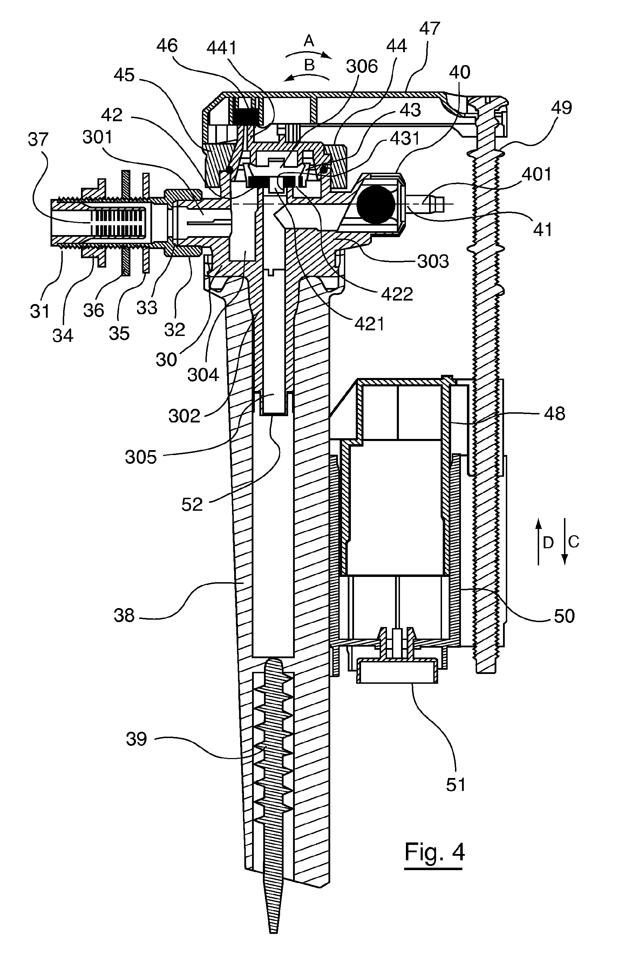

Le couvercle peut donc prendre différentes positions angulaires par rapport à l'axe de la liaison pivot sans que cela n'ait d'incidence sur le fonctionnement des moyens d'ouverture/fermeture. Préférentiellement, le couvercle peut pivoter de +/- 170° par rapport à la position qu'il occupe par exemple à la figure 4. Ceci confère une souplesse d'installation du dispositif de remplissage selon l'invention.

Préférentiellement, ledit couvercle comprend au moins un axe susceptible de coopérer avec ledit levier pivotant.

Ainsi, le couvercle et le levier pivotant sont solidaires en pivotement autour de l'axe de la liaison pivot de sorte que lorsque le levier pivotant est entraîné à rotation autour de l'axe de la liaison pivot, le couvercle pivote également autour de cet axe.

Selon une caractéristique avantageuse de l'invention, le dispositif de remplissage d'un réservoir de chasse d'eau selon l'invention comprend des moyens de blocage de ladite liaison pivot.

L'ensemble formé par le flotteur, le levier pivotant et le couvercle peut donc être maintenu en position de façon qu'ils ne puissent pas pivoter autour de l'axe de la liaison pivot de façon intempestive consécutivement à l'installation du dispositif de remplissage.

Préférentiellement, lesdits moyens de blocage sont formés par un écrou susceptible de maintenir ledit couvercle sur ledit corps principal.

La mise en oeuvre d'un tel écrou permet de bloquer simplement mais efficacement la liaison pivot.

Selon un aspect avantageux de l'invention, un canal perforé est ménagé à la surface dudit couvercle.

Un tel canal peut permettre à de l'air et/ou de l'eau d'entrer ou de quitter la troisième cavité de façon à modifier la pression qui y règne.

Préférentiellement, le dispositif de remplissage selon l'invention comprend des moyens d'obturation dudit canal perforé.

De tels moyens d'obturation permettent d'obturer ou de libérer le canal perforé. Ceci permet de contrôler la pression régnant à l'intérieur de la troisième cavité.

Avantageusement, lesdits moyens d'obturation comprennent un bouchon solidaire dudit levier pivotant.

L'ouverture et la fermeture des moyens d'obturation est donc commandée par le pivotement du levier pivotant qui est lié au flotteur. Ainsi, lorsque le niveau d'eau contenue dans le réservoir est élevé, les moyens d'obturation obturent le canal perforé de façon que la pression régnant à l'intérieur de la troisième cavité est importante. La membrane obture alors la deuxième cavité et l'eau provenant du réseau ne peut plus être injectée dans le réservoir. Par opposition, lorsque le niveau d'eau contenue dans le réservoir est faible, le levier pivotant bascule de façon que les moyens d'obturation sont ouverts et que le canal perforé est libéré. La pression à l'intérieur de la troisième cavité baisse et la membrane se soulève de sorte que l'eau provenant du réseau passe de la première cavité à la deuxième cavité puis est injectée dans le réservoir.

Selon une caractéristique avantageuse, ladite membrane souple est traversée par un orifice décentré.

L'eau provenant du réseau peut ainsi passer de la première cavité à la troisième cavité par l'orifice décentré de façon que, lorsque les moyens d'obturation obturent le canal perforé, la troisième cavité se remplit d'eau de sorte que la pression qui y règne augmente et que la membrane souple s'abaisse et obture la deuxième cavité.

Selon un aspect préféré de l'invention, un insert est logé à l'intérieur de ladite troisième cavité, ledit insert présentant une extension obturant un orifice central ménagé dans ladite membrane souple.

Un tel insert peut agir sur la membrane souple de façon à la plaquer contre la partie supérieure de la deuxième cavité lorsque la pression augmente à l'intérieur de la troisième cavité. La mise en oeuvre d'un tel insert peut en outre permettre de renforcer l'étanchéité entre la première cavité et la deuxième cavité de façon à empêcher l'eau de pénétré celle-ci lorsque le niveau d'eau contenue dans le réservoir a atteint son niveau maximum et que les moyens d'obturation sont fermés.

Selon une caractéristique avantageuse de l'invention, ledit flotteur est guidé en translation le long d'une crémaillère formée sur lesdits moyens de distribution.

Ceci permet d'assurer un bon guidage en translation du flotteur, et notamment d'éviter efficacement que le flotteur se bloque le long des moyens de distribution lors de ses mouvements de translation.

Avantageusement, ledit levier pivotant est lié audit flotteur au moyen d'une vis.

Une telle vis permet de régler la distance séparant le flotteur du levier pivotant. Ceci permet d'ajuster le niveau maximum d'eau contenue dans le réservoir. Ainsi, plus la distance séparant le flotteur du levier pivotant est importante, plus le niveau maximum d'eau du réservoir est faible, et inversement.

Selon un aspect préféré de l'invention, une hélice est logée à une extrémité inférieure desdits moyens de distribution.

La mise en oeuvre d'une telle hélice permet de ralentir l'écoulement d'eau à travers les moyens de distribution et donc d'augmenter la pression qui y règne. Ceci permet d'équilibrer la différence de pression entre l'eau provenant du réseau de distribution et l'eau s'échappant des moyens de distribution en direction du réservoir. Ceci permet en outre de diminuer l'apparition de bruit dû à cet écoulement.

Selon un autre aspect préféré de l'invention, un clapet anti-retour est disposé entre lesdits moyens de distribution et ladite deuxième cavité.

Un tel clapet anti-retour permet le passage de l'eau depuis la deuxième cavité vers les moyens de distribution de façon à alimenter le réservoir, mais peut prévenir les remontées d'eau dans la deuxième cavité qui pourraient se produire lorsqu'il y a dépression dans le réseau d'eau d'alimentation. Selon une autre caractéristique avantageuse de l'invention, un tel dispositif de remplissage selon l'invention comprend des moyens d'introduction d'air dans ladite deuxième cavité (mise à l'air libre), comprenant une ouverture susceptible d'être obturée par une bille.

La mise en oeuvre de tels moyens d'introduction d'air permet à de l'air de pénétrer à l'intérieur de la deuxième cavité sous l'effet de la fermeture du joint servovalve, ce pour répondre à la norme « antisiphonnage ».

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un dispositif de remplissage selon l'art antérieur solidarisé à gauche (traits pleins) et à droite (pointillés) d'un réservoir d'une chasse d'eau ;
- la figure 2 est une vue de côté d'un dispositif de remplissage selon l'art antérieur, solidarisé à l'arrière d'un réservoir de chasse d'eau ;
- la figure 3 est une vue éclatée d'un dispositif de remplissage selon l'invention ;
- la figure 4 est une vue en coupe du dispositif de remplissage illustré à la figure 3 ;

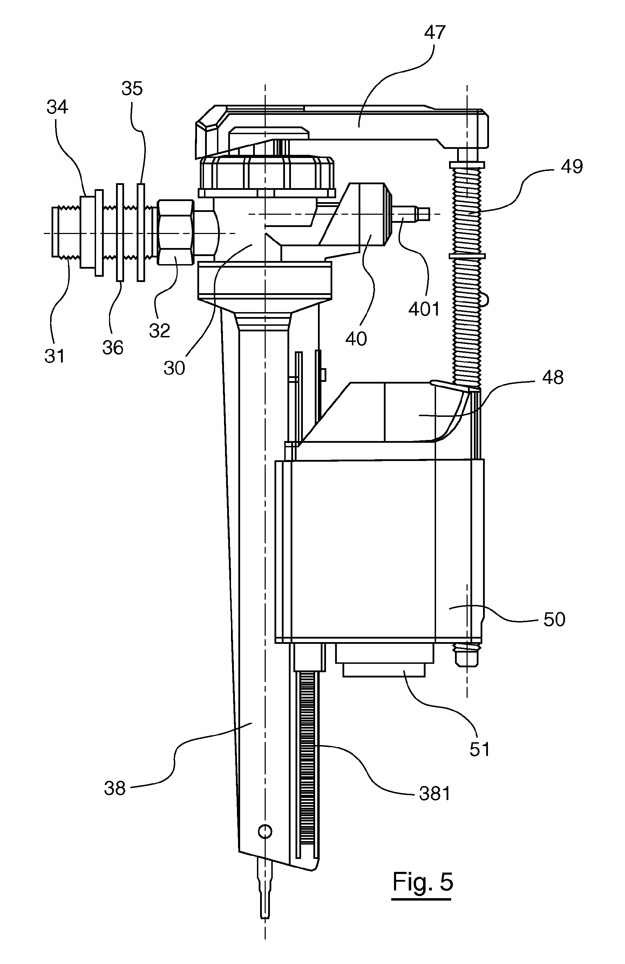

- la figure 5 est une vue de côté du dispositif de remplissage illustré aux figures 3 et 4 ;
- les figures 6 à 8 illustrent différentes vues en perspective du dispositif de remplissage selon l'invention, dans lesquelles l'ensemble formé par le flotteur, le levier pivotant et les moyens d'ouverture/fermeture est représenté selon différentes orientations.

### 7. Description d'un mode de réalisation de l'invention

### 7.1. Rappel du principe général de l'invention

Le principe général de l'invention repose sur un dispositif de remplissage d'un réservoir de chasse d'eau dont l'ensemble formé par le flotteur relié aux moyens d'ouverture/fermeture par un levier pivotant, peut être pivoté autour d'un axe sensiblement confondu avec l'axe principal des moyens de distribution d'eau dans le réservoir.

La mise en oeuvre d'un tel flotteur orientable peut permettre de modifier l'encombrement général du dispositif de remplissage en fonction des contraintes liées à l'environnement.

Cette caractéristique nouvelle et inventive confère au dispositif de remplissage d'un réservoir de chasse d'eau selon l'invention une très grande modularité et une grande souplesse notamment en ce qui concerne son installation.

### 7.2. Architecture d'un exemple de dispositif de remplissage selon l'invention

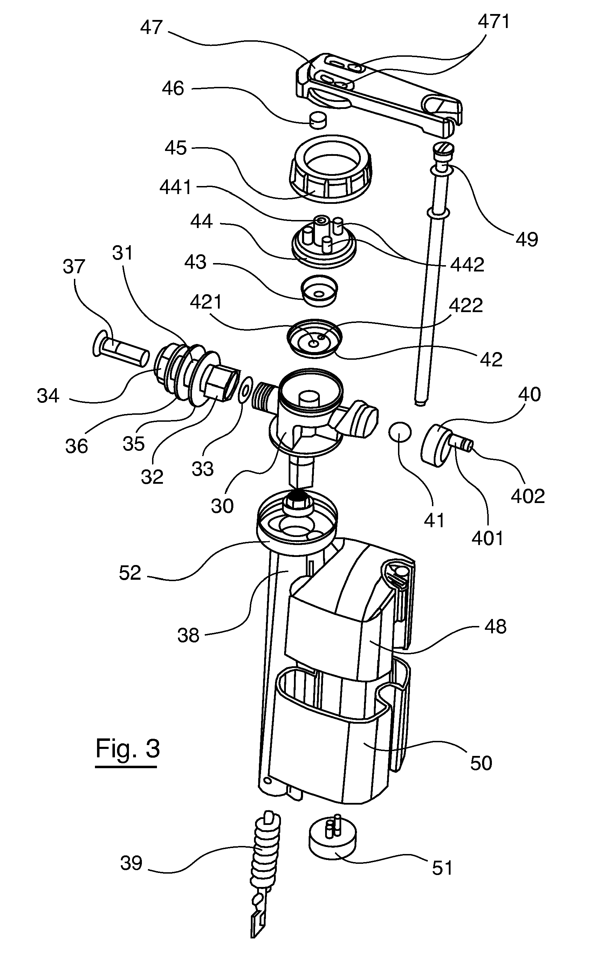

Les figures 3 et 4 illustrent respectivement une vue éclatée et une vue en coupe d'un exemple de dispositif de remplissage de chasse d'eau selon l'invention.

Un tel dispositif de remplissage comprend un corps principal 30 qui présente un premier prolongement creux 301 à l'intérieur duquel peut circuler de l'eau et auquel est solidarisée une arrivée d'eau 31 au moyen d'un écrou 32. L'étanchéité entre l'arrivée d'eau 31 et le corps principal 30 est réalisée au moyen d'un joint 33.

Par ailleurs, une première cavité 304 ménagée dans le corps principal 30 communique directement avec l'arrivée d'eau 31 par l'intermédiaire du premier prolongement creux 301.

L'arrivée d'eau 31 permet en outre de solidariser le dispositif de remplissage selon l'invention au réservoir d'une chasse d'eau. À cet effet, l'arrivée d'eau est filetée de façon à pouvoir y visser un boulon 34. Après que l'arrivée d'eau 31 est introduite dans un orifice ménagé à cet effet dans le réservoir d'une chasse d'eau, le réservoir peut être enserré entre le boulon 34 et une rondelle 35. Un joint 36 permet d'éviter d'abîmer la céramique. L'arrivée d'eau 31 est en outre destinée à être connectée à un réseau de distribution d'eau d'un bâtiment dans lequel est installé la chasse d'eau.

Un filtre 37 peut être introduit à l'intérieur de l'arrivée d'eau 31 de façon à prévenir l'introduction de saleté à l'intérieur du corps principal 30 qui pourraient nuire au bon fonctionnement du dispositif de remplissage selon l'invention.

Le corps principal 30 présente également un deuxième prolongement creux 302 destiné à s'étendre vers une partie inférieure du réservoir. Ce corps creux est traversé par une deuxième cavité 305 à travers laquelle l'eau peut s'écouler en direction du réservoir.

Une colonne d'évacuation 38, qui présente une extrémité supérieure de forme complémentaire de celle du deuxième prolongement 302, est solidarisée au corps principal 30 par une liaison pivot. La colonne d'évacuation 38 est donc susceptible de pouvoir être pivotée par rapport au corps principal 30 autour d'un axe sensiblement vertical. L'assemblage de la colonne 38 sur le corps 30 peut se faire par exemple par clippage.

La deuxième cavité 305 communique directement avec la colonne d'évacuation 38 et avec un troisième prolongement creux 303 formé dans le corps principal 30 et qui s'étend sensiblement à l'opposé du premier prolongement creux 301.

Une hélice 39 est solidarisée dans la partie inférieure de la colonne d'évacuation 38.

Un capot 40 présentant un tube perforé 401 peut être fixé au troisième prolongement 303 de façon à y maintenir une bille 41. Comme il sera expliqué plus en détails par la suite, la bille 41 est susceptible de se déplacer à l'intérieur du troisième prolongement creux 303 de façon à pouvoir obturer ou libérer l'orifice 402 traversant le tube perforé 401. L'ensemble formé par le capot 40, le tube perforé 401, constitue le joint bille.

Des moyens d'ouverture/fermeture permettent d'autoriser ou d'empêcher le passage de l'eau provenant de l'arrivée d'eau 31 depuis la première cavité 304 vers la deuxième cavité 305. Ces moyens d'ouverture/fermeture sont intégrés dans la partie supérieure du corps principal 30. Ils constituent un mécanisme dénommé servovalve.

Ces moyens d'ouverture/fermeture comprennent une membrane souple 42, un insert 43, un couvercle 44, l'ensemble étant maintenu dans le corps principal 30 au moyen d'un écrou 45.

La membrane souple 42 est sensiblement circulaire et incurvée. Elle est traversée par un orifice central 421 et par un orifice décentré 422. Cette membrane souple 42 est destinée à reposer sur le contour supérieur du corps principal 30 de façon que le creux qu'elle défini soit orienté vers le bas.

L'insert 43 de forme essentiellement circulaire présente en son centre une extension 431 perforée. L'insert 43 est destiné à être placé dans le creux de la membrane souple 42 en introduisant l'extension 431 à l'intérieur de l'orifice central 421 de la membrane souple 42.

Le couvercle 44 est destiné à venir couvrir l'insert 43 et la membrane souple 42 de façon à définir une cavité 306. Le contour périphérique du couvercle 44 vient en appui contre le contour de la membrane souple 42. Un canal perforé 441 est ménagé à la surface du couvercle 44.

Il peut d'ores et déjà être noté que l'ensemble formé par la membrane souple 42 et l'insert 43 ainsi que le couvercle 44 ne sont pas indexés les uns aux autres. Ils peuvent donc être positionnés et maintenus à l'horizontal dans n'importe qu'elle position angulaire à l'intérieur du corps principal 30 au moyen de l'écrou 45.

Le canal 441 du couvercle 44 peut être obturé au moyen d'un tampon 46 qui est solidaire d'un levier pivotant 47.

Le levier pivotant 47 est solidarisé au couvercle 44 de façon qu'il puisse pivoter alternativement selon les flèches A et B. Il est traversé par deux trous 471 à l'intérieur desquels s'étendent des tétons 442 sensiblement verticaux formés sur le couvercle 44. Par ailleurs, le levier pivotant 47 est relié, à l'extrémité opposée de celle par laquelle il est solidarisé au couvercle 44, à un flotteur 48 par l'intermédiaire d'une tige de réglage 49.

La tige de réglage 49 est filetée et vissée dans le flotteur 48. Elle peut donc permettre de modifier la position du flotteur 48 selon un axe vertical en opérant à son vissage ou à son dévissage, selon que l'on souhaite rapprocher ou éloigner le flotteur 48 du levier pivotant 47. Comme il sera expliqué plus en détails par la suite, le réglage de la hauteur du flotteur 48 permet d'ajuster le niveau d'eau contenu dans le réservoir de la chasse d'eau.

Le flotteur 48 est logé dans un bassin flotteur 50 qui est fermé dans sa partie inférieure par un bouchon 51. Le bassin flotteur 50 et le flotteur 48 sont guidés en translation le long de la colonne d'évacuation 38 au moyen d'une crémaillère 381 formée sur une portion de la longueur de la colonne d'évacuation 38.

Un clapet anti-retour 52, positionné à l'extrémité du deuxième prolongement creux 302, est susceptible d'autoriser le passage de l'eau depuis la deuxième cavité 305 vers la colonne d'évacuation 38, et de prévenir une remontée d'eau depuis la colonne d'évacuation 38 vers la deuxième cavité 305.

### 7.3. Fonctionnement

Le fonctionnement du dispositif de remplissage selon l'invention va maintenant être expliqué.

La figure 4 illustre un dispositif de remplissage selon l'invention dans une position d'équilibre prise lorsque l'eau contenue dans le réservoir a atteint son niveau maximum, c'est-à-dire le niveau auquel le flotteur 48 agit par la poussée d'Archimède sur le levier pivotant 47 de façon que le tampon 46 obture le canal 441 du couvercle 44.

Dans cette position, l'eau provenant du réseau de distribution d'eau du bâtiment traverse l'arrivée d'eau 31 et pénètre la première cavité 304. L'eau passe ensuite à travers l'orifice décentré 422 de la membrane souple 42 de façon que la cavité 306 se remplit d'eau. La pression régnant à l'intérieur de la cavité 306 augmente de sorte que la membrane souple 42 est plaquée par l'insert 43 contre le bord supérieur du deuxième prolongement creux 302. Les moyens d'ouverture/fermeture se trouvent ainsi dans une position d'obturation dans laquelle l'eau ne peut pas passer dans la deuxième cavité 305 en direction de la colonne d'évacuation 38 afin de remplir le réservoir de la chasse d'eau.

Lorsqu'un utilisateur tire la chasse d'eau, le niveau d'eau contenue dans le réservoir baisse. À mesure que le niveau d'eau baisse, le flotteur 48 se déplace le long de la colonne d'évacuation 38 selon la flèche C. Sous l'effet de son poids, le flotteur 48 agit, par l'intermédiaire de la tige de réglage 49, sur le levier pivotant 47 de sorte que celui-ci pivote selon la flèche A. Le tampon 46, solidaire du levier pivotant 47, libère alors le canal 441. La pression régnant à l'intérieur de la cavité 306 diminue, et la membrane souple 42 se soulève sous l'effet de la pression de l'eau provenant du réseau de distribution. Les moyens d'ouverture/fermeture se trouvent alors dans une position d'ouverture dans laquelle l'eau peut passer de la cavité 306 dans la deuxième cavité 305. L'eau passe ensuite de la deuxième cavité 305 dans la colonne d'évacuation 38 en passant à travers le clapet anti-retour 52.

Avant d'être évacuée dans le réservoir de la chasse d'eau, l'eau passe à travers l'hélice 39. La mise en oeuvre d'une telle hélice 39 permet de réduire la vitesse d'évacuation de l'eau et donc d'augmenter la pression de l'eau à l'intérieur de la colonne d'évacuation 38. Ceci permet de réduire la différence entre la pression de l'eau provenant du réseau de distribution et la pression de l'eau s'échappant de la colonne d'évacuation 38, et en conséquence de limiter la production de bruit lors du remplissage du réservoir de la chasse d'eau.

L'écoulement de l'eau à travers la colonne d'évacuation 38 mis en pression par l'hélice 39 pousse la bille 41 qui se déplace alors à l'intérieur du capot 40 de manière à ne pas permettre l'introduction d'air dans la deuxième cavité 305. Ceci permet de faciliter l'écoulement de l'eau à travers la colonne d'évacuation 38 sans bruit ambiant.

À mesure que le niveau de l'eau contenue dans le réservoir augmente, l'eau déborde dans le bassin flotteur 50. Le flotteur 48 entraîne alors, sous l'effet de la poussée d'Archimède, le levier pivotant 47 à pivoter selon la flèche B.

Le niveau de l'eau contenue dans le réservoir a atteint un niveau tel que le tampon 46 obture le canal 441, la pression dans la cavité 306 augmente, et la membrane souple 42 est plaquée contre la partie supérieure du deuxième prolongement creux 305 de sorte que l'eau provenant du réseau de distribution ne peut plus pénétrer la cavité 305 et alimenter le réservoir par la colonne d'évacuation 38. Le niveau dans le réservoir reste alors stable.

### 7.4. Réglage de l'orientation du flotteur

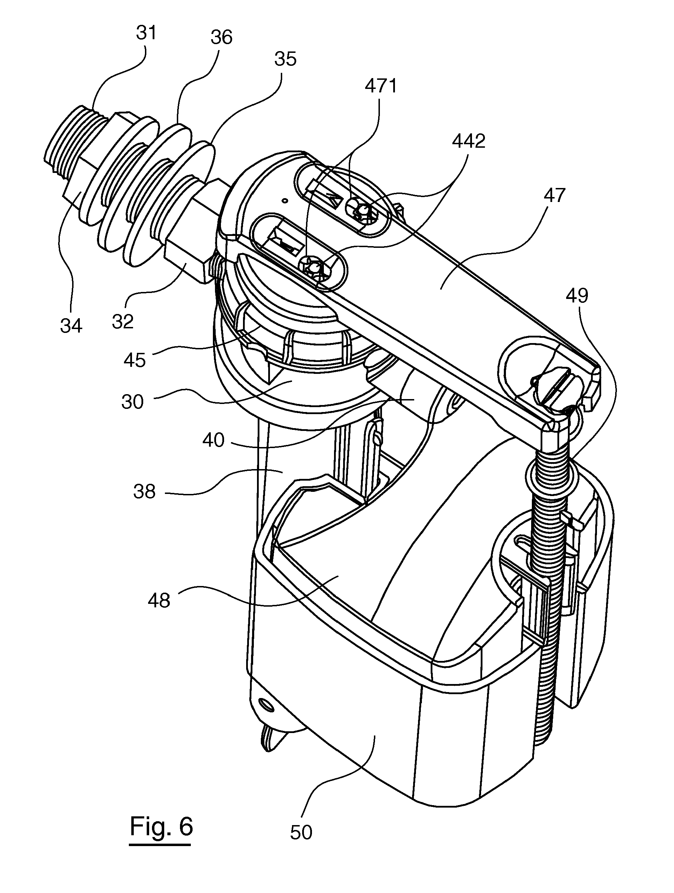

Tel qu'il a été mentionné précédemment, la position angulaire du flotteur du dispositif de remplissage selon l'invention peut être modifiée de façon à ce que le dispositif puisse être installé dans un grand nombre de réservoir de chasse d'eau. Cet aspect de l'invention est expliqué en relation avec les figures 6 à 8.

La figure 6 est une vue en perspective d'un dispositif de remplissage selon l'invention sur laquelle le levier pivotant 47 et le bassin 50 / flotteur 48 se trouvent sensiblement dans l'alignement de l'arrivée d'eau 31.

De façon à modifier la position du levier pivotant 47 et du bassin 50/ flotteur 48, un installateur peut dévisser l'écrou 45, puis faire pivoter l'ensemble formé par la colonne d'évacuation 38, le flotteur 48, le bassin flotteur 50, la tige de réglage 49, le levier pivotant 47, et le couvercle 44 autour de l'axe de la liaison pivot liant la colonne d'évacuation 38 au corps principal 30. L'ensemble composé des éléments listés ci-dessus sera dénommé ensemble mobile en rotation par la suite.

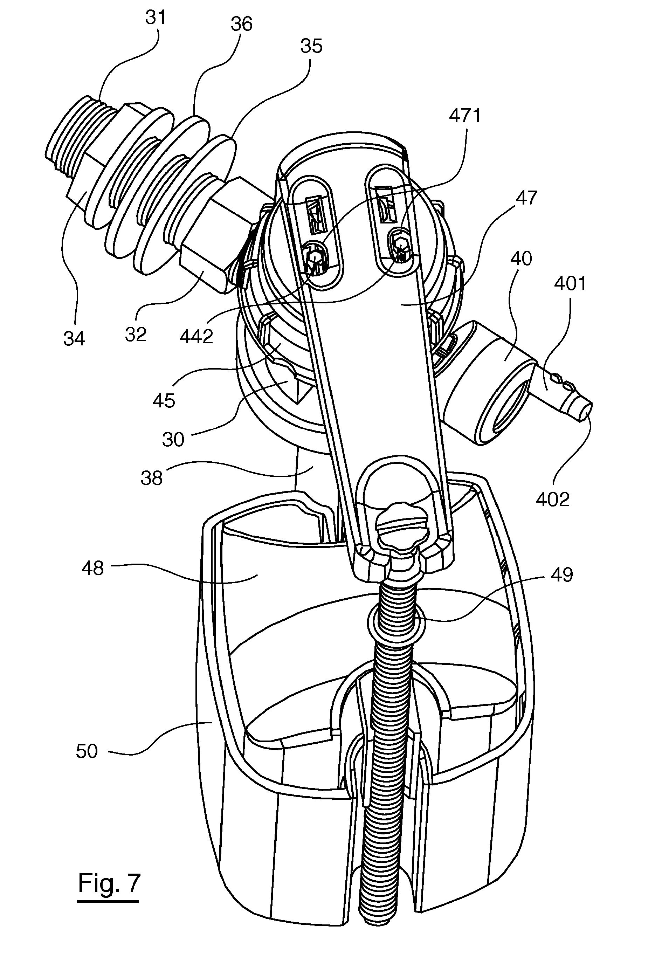

La figure 7 illustre une vue en perspective d'un dispositif de remplissage selon l'invention dans lequel l'ensemble mobile en rotation se trouve dans une position dans laquelle il forme un angle non nul avec l'arrivée d'eau 31. Le serrage de l'écrou 45 a pour effet de bloquer le couvercle 44 en rotation et la liaison pivot, et donc d'empêcher la rotation de l'ensemble mobile en rotation.

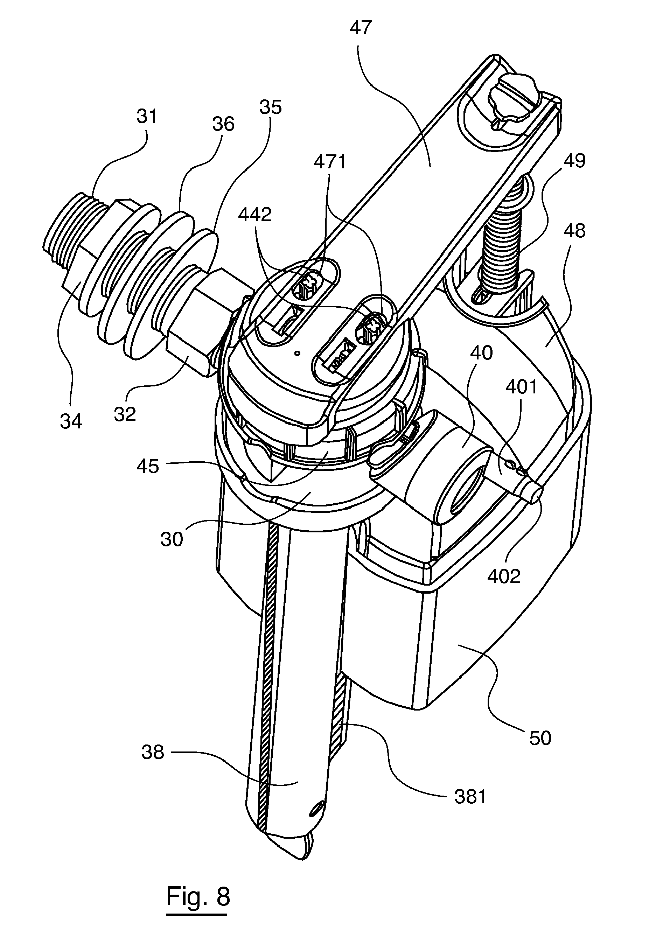

La figure 8 illustre une vue en perspective dans laquelle l'ensemble mobile en rotation forme un angle d'environ 90° par rapport à l'arrivée d'eau 31.

La plage de variation angulaire de la position de l'ensemble mobile en rotation par rapport à l'arrivée d'eau 31 est d'environ +/- 170°. Cette plage de variation de position angulaire permet d'adapter le dispositif de remplissage selon l'invention à un grand nombre de chasse d'eau, et ce aussi bien lorsque l'orifice présent sur le réservoir et à travers lequel passe l'arrivée d'eau 31 est placé à droite, à gauche ou derrière le réservoir, ou même raccordé à un tube d'alimentation basse.

L'invention apporte donc une solution au problème de l'orientation du flotteur notamment par la mise en oeuvre de moyens d'ouverture/fermeture dont les composants peuvent être pivotés les uns par rapport aux autres, ce que les techniques de l'art antérieur ne permettent pas.

## Revendications

1. Dispositif de remplissage d'un réservoir de chasse d'eau destiné à être couplé à des moyens d'alimentation (31) en eau, ledit dispositif comprenant :
- un corps principal (30) ;
- des moyens de distribution d'eau (38) dans ledit réservoir, destinés à s'étendre en direction d'une partie inférieure dudit réservoir ;
- des moyens d'ouverture/fermeture de circulation d'eau entre lesdits moyens d'alimentation (31) et lesdits moyens de distribution (38) ;
- des moyens d'actionnement desdits moyens d'ouverture/fermeture comprenant un flotteur (48) mobile en translation le long desdits moyens de distribution (38), et relié audit moyens d'ouverture/fermeture par un levier pivotant (47),
**caractérisé en ce qu'**il comprend une liaison pivot présentant un axe de rotation destiné à s'étendre sensiblement verticalement, ledit flotteur (48), ledit levier pivotant (47) et lesdits moyens de distribution étant montés mobiles à rotation solidairement autour dudit axe.

2. Dispositif de remplissage d'un réservoir de chasse d'eau selon la revendication 1, **caractérisé en ce que** lesdits moyens de distribution (38) sont liés audit corps principal (30) par ladite liaison pivot.

3. Dispositif de remplissage d'un réservoir de chasse d'eau selon l'une des revendications 1 et 2, **caractérisé en ce que** lesdits moyens d'ouverture/fermeture comprennent une membrane (42) logée entre une première (304) et une deuxième (305) cavités, formées dans ledit corps principale (30), et susceptible d'obturer ladite deuxième cavité (305).

4. Dispositif de remplissage d'un réservoir de chasse d'eau selon l'une quelconque des revendications 1 à 3, **caractérisé en ce que** lesdits moyens d'ouverture/fermeture comprennent un couvercle (44) susceptible d'être pivoté autour dudit axe.

5. Dispositif de remplissage d'un réservoir de chasse d'eau selon l'une quelconque des revendications 1 à 4, **caractérisé en ce qu'**il comprend des moyens de blocage de ladite liaison pivot.

6. Dispositif de remplissage d'un réservoir de chasse d'eau selon la revendication 5, **caractérisé en ce que** lesdits moyens de blocage sont formés par un écrou (45) susceptible de maintenir ledit couvercle (44) sur ledit corps principal (30).

7. Dispositif de remplissage d'un réservoir de chasse d'eau selon l'une quelconque des revendications 1 à 6, **caractérisé en ce qu'**une hélice (39) est logée à une extrémité inférieure desdits moyens de distribution (38).

8. Dispositif de remplissage d'un réservoir de chasse d'eau selon l'une quelconque des revendications 1 à 7, **caractérisé en ce qu'**il comprend un clapet anti-retour (52) disposé entre lesdits moyens de distribution (38) et ladite deuxième cavité (305).

9. Dispositif de remplissage d'un réservoir de chasse d'eau selon l'une quelconque des revendications 1 à 8, **caractérisé en ce qu'**il comprend des moyens d'introduction d'air dans ladite deuxième cavité (305), lesdits moyens d'introduction d'air comprenant un orifice (402) susceptible d'être obturé par une bille (41).
